# EUROPEAN PATENT APPLICATION

(11) **EP 3 431 449 A1**
(43) Date of publication of application: **23.01.2019**
(21) Application number: 17766415.8
(22) Date of filing: 03.03.2017
(51) Int. Cl.: C03B 33/02, C03B 11/00, C03C 17/06, C03C 17/23, C03C 27/06, C03C 27/12, E06B 9/24

(54) **GLASS PLATE AND GLASS STRUCTURE**

(30) Priority: 17.03.2016 JP 2016054013
(71) Applicant: AGC INC., Chiyoda-ku, Tokyo 1008405 (JP)
(72) Inventor: ISHIOKA, Hideki, Tokyo 100-8405 (JP)
(74) Representative: Müller-Boré & Partner Patentanwälte PartG mbB
(86) International application number: PCT/JP2017/008577
(87) International publication number: WO 2017/159412

(57) **Abstract**

A glass plate includes a first surface and a second surface that is opposite to the first surface. A concave portion is formed on the first surface toward the second surface side with reference to the first surface. A convex portion is formed on the first surface toward a side opposite to the second surface with reference to the first surface.

## Description

### BACKGROUND OF THE INVENTION

### 1. Field of the Invention

0001 The disclosure herein generally relates to a glass plate and a glass structure.

### 2. Description of the Related Art

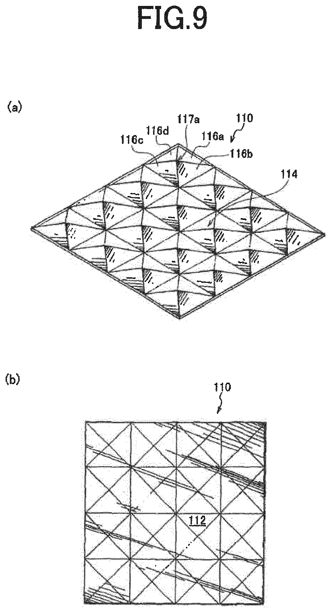

0002 Conventionally, as illustrated in FIG. 9, a decorated glass 110 including a first planar surface 112 and a second surface 114 opposite to the first surface 112 has been known (See Patent document 1). The second surface 114 is a facet forming surface including a plurality of glass cut pieces, each of which is defined by facets 116a, 116b, 116c, and 116d.

### [Citation List]

### [Patent Literature]

0003 [PTL 1] Japanese Patent No. 3184522

### SUMMARY OF THE INVENTION

### [Technical Problem]

0004 However, there has been a problem, in the configuration disclosed in Patent Document 1, that in order to form facets (inclined surfaces) having great sizes without changing inclination angles to enhance design property, a thickness of the glass plate is required to be thick. Thus, it has been difficult to form inclined surfaces with great sizes.

0005 In view of the aforementioned background, the present invention mainly aims at providing a glass plate having inclined surfaces with great sizes.

### [Solution to Problem]

0006 In order to achieve the aim, the present invention provides a glass plate including a first surface and a second surface that is opposite to the first surface,
a concave portion being formed on the first surface toward the second surface side with reference to the first surface, and
a convex portion being formed on the first surface toward a side opposite to the second surface with reference to the first surface, is provided.

### [Advantageous effect of Invention]

0007 According to an aspect of the present invention, a glass plate, on which inclined surfaces with great sizes can be formed, is provided

### BRIEF DESCRIPTION OF THE DRAWINGS

FIG. 1 is a plan view depicting an example of a glass plate according to an embodiment of the present invention.
FIG. 2 is a cross section of the glass plate according to the embodiment of the present invention, cut along a line A-A in FIG. 1.
FIG. 3 is a diagram schematically depicting an example of a relation between an inclination surface of a convex portion and an enhancement of a design property, in the glass plate according to the embodiment.
FIG. 4 is a cross section depicting an example of a glass plate according to a first variation of the embodiment.
FIG. 5 is a cross section depicting an example of a glass plate according to a second variation of the embodiment.
FIG. 6 is a cross section depicting an example of a glass structure using the glass plate according to the embodiment.
FIG. 7 is a cross section depicting another example of the glass structure using the glass plate according to the embodiment.
FIG. 8 is a cross section depicting yet another example of the glass structure using the glass plate according to the embodiment.
FIG. 9 is a diagram depicting an example of a conventional glass plate.

### DETAILED DESCRIPTION OF THE PREFERRED EMBODIMENTS

0009 In the following, with reference to drawings, a laminated plate according to an embodiment of the present invention will be described. Note that in the following descriptions, as an example, a laminated glass used for a vehicle window will be described. However, the present invention is not limited to this. For example, the laminated plate may be a window glass for building, a plastic glazing, a plastic plate, a plastic decorative board used for an interior or an exterior of a vehicle, and the like.

0010 Moreover, the laminated plate may be, as a vehicle window, for example, a front windshield, a slide glass, a fitted window, rear windshield, or a roof glass.

0011 Moreover, in the drawings for explaining embodiments, coordinates are defined by arrows in the lower left part in each drawing. An explanation will be provided by using the coordinates as necessary. Moreover, in the specification, "X-direction" is assumed to indicate not only a direction from the tail of the arrow representing X-coordinates to the tip, but also a direction inverted by 180 degrees, from the tip to the tail. "Y-direction" and "Z-direction" are also assumed to indicate not only directions from the tails of the arrow representing Y-coordinates and Z-coordinates, respectively, to the tips, but also the respective directions inverted by 180 degrees from the tips to the tails. In the specification, the X-direction and the Y-direction are also referred to as planar directions, and the Z-direction is also referred to as a plate thickness direction.

0012 Moreover, in the specification, terms such as "parallel" or "orthogonal" allow deviations keeping with the effect of the present invention. For example, errors of about ±5° are allowed from parallel or orthogonal positional relationships in a strict sense.

0013 Moreover, in the present application, a concave-convex portion or a convex portion is not limited to a glass cut piece. For example, the concave-convex portion or the convex portion may be a shape obtained by performing a press forming for a glass plate heated at a temperature around a softening point using a metallic mold or the like. The concave-convex portion or the convex portion may be formed by reducing a pressure of a concave portion of the metallic mold when the press forming is performed so that a glass enters a deep portion of the concave portion of the metallic mold. Moreover, a molten glass may be poured into a metallic mold and cooled, to prepare the concave-convex portion or the convex portion. 0014

### (First embodiment)

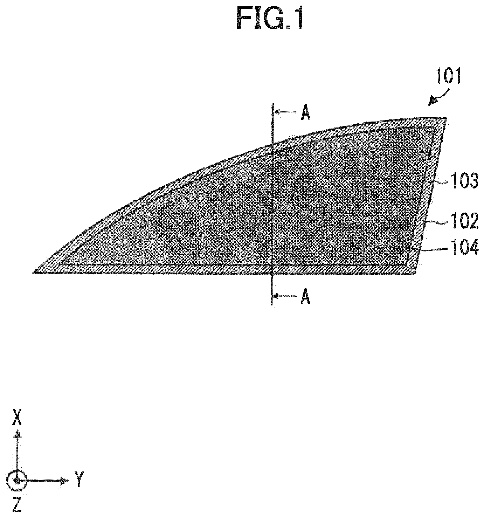

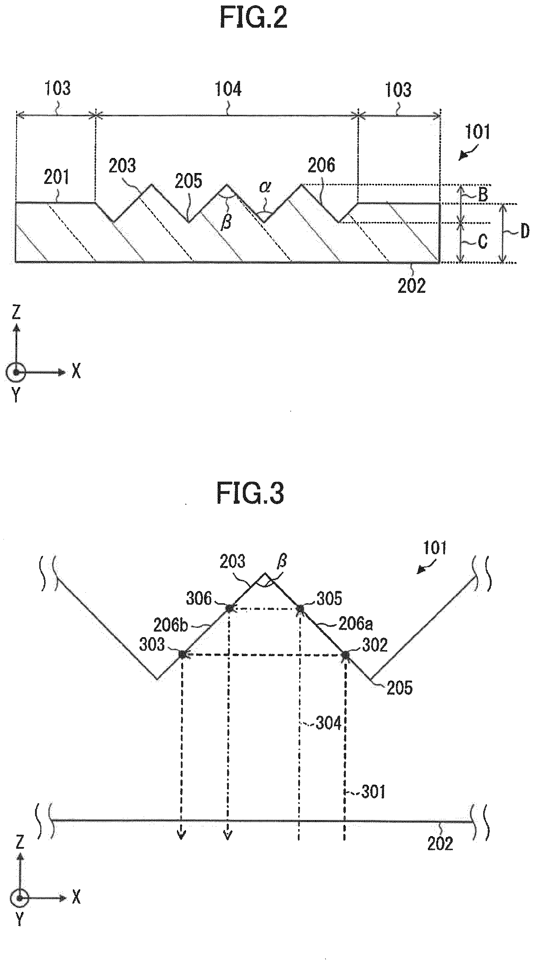

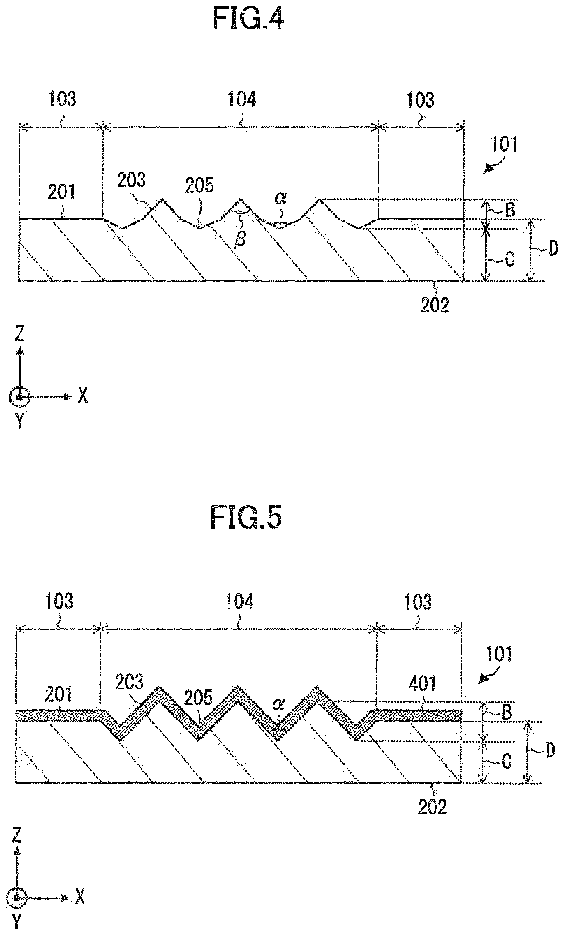

FIG. 1 is a plan view depicting an example of a glass plate according to an embodiment of the present invention. FIG. 2 is a cross section of the glass plate according to the embodiment of the present invention cut along a line of A-A, illustrated in FIG. 1. FIG. 3 is a diagram schematically depicting an example of a relation between an inclination surface of the convex portion and an enhancement of a design property, in the glass plate according to the embodiment. FIGS. 4 and 5 are diagrams depicting examples of the glass plate according to variations of the embodiment. The cross section, cut along the line of A-A, passes through a center of gravity G of the glass plate 101.

0015 The glass plate 101 according to the first embodiment includes a first surface 201, and a second surface 202 that is opposite to the first surface 201. Moreover, in a planar view, the glass plate 101 includes a periphery region 103 along a periphery 102, and an in-plane region 104 that occupies a region inside the periphery region 103.

0016 The glass plate 101 includes a concave portion 205 formed on the first surface 201 toward the second surface 202 side with respect to the first surface 201. Moreover, the glass plate 101 includes a convex portion 203 formed on the first surface 201 toward the side of the first surface 201 opposite to the second surface 202.

0017 According to the above-described configuration, an inclined surface 206 with a great size can be obtained without increasing a plate thickness of the glass plate 101.

0018 Note that the "plate thickness of the glass plate" referred in the specification indicates a distance "B" from the second surface to a tip of the convex portion 203.

0019 Next, with reference to FIG. 3, a principle that the design property is enhanced when the size of the inclined surface 206 increases, will be described. In the following, an example, where the first surface 201 is a bonding surface and the convex portion 203 and the concave portion 205 are observed from the second surface 202 side, will be described. An angle β of the convex portion 203 is assumed to be 90°, and the first surface 201 is assumed to totally reflect light.

0020 A dashed line in FIG. 3 indicates a light path 301 in which a first light, orthogonal to the glass plate 101, enters the second surface 202, and reflected. The first light enters the first inclined surface 206a at an angle of 45°, and is reflected toward a second inclined surface 206b at a first point 302. Afterwards, the first light enters the second inclined surface 206b at an angle of 45°, and is reflected toward the second surface 202 at a second point 303. That is, as a result of reflections on the inclined surfaces 206a and 206b of the convex portion 203, the first light orthogonally entering the glass plate 101 is reflected in the same direction as the incident direction of the first light.

0021 A dot-dashed line in FIG. 3 indicates a light path 304 in which a second light, orthogonal to the glass plate 101, enters the second surface 202, and reflected. In the same way as the first light, as a result of reflections on the first inclined surface 206a of the convex portion 203 (at a third point 305) and on the second inclined surface 206b (at a fourth point 306), the second light orthogonally entering the glass plate 101 is also reflected in the same direction as the incident direction of the second light.

0022 In the aforementioned description, two light paths were described as a typical example. For an increase in light having such a light path, for a person, who sees the convex portion 203 and the concave portion 205 from the second surface 202 side, brilliancy of the convex portion 203 and the concave portion 205 increases accordingly. That is, as the sizes of the inclined surfaces 206a and 206b increase (in cross sections, the inclined surfaces 206a and 206b become longer), an amount of light (luminance) recognized by a person increases, and a design property is enhanced.

0023 The convex portion 203 and the concave portion 205 may be formed in the in-plane region 104 of the glass plate 101, as illustrated in FIG. 2. The convex portion 203 and the concave portion 205 may be arranged over an entirety of the in-plane region 104 or may be arranged only in a part of the in-plane region 104.

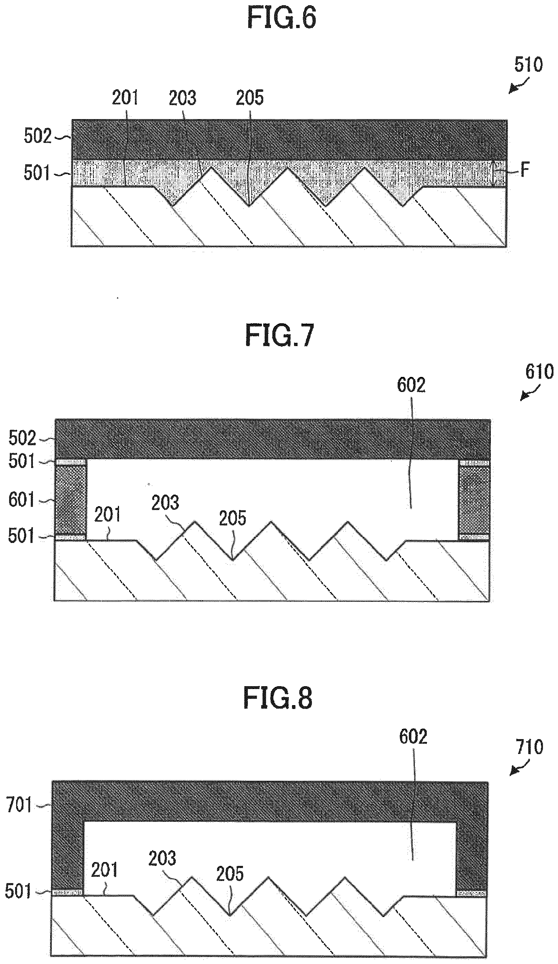

0024 The convex portion 203 and the concave portion 205 may be formed in the periphery region 103 of the glass plate 101. The convex portion 203 and the concave portion 205 may be formed over an entirety of the periphery region 103, or may be formed only in a part of the periphery region 103. FIG. 6 is a cross section depicting an example of a configuration in which a single body of the glass plate 101 is bonded to a plate-like body 502 such as a wall surface, where the first surface 201 side of the glass plate 101 is a bonding surface. When the convex portion 203 and the concave portion 205 are present along the periphery 102 of the glass plate 101, in the periphery region 103, a gap F is not formed between the plate-like body 502 and the first surface 201, and the glass plate 101 is unlikely to be separated from the periphery region 103.

0025 Moreover, a plurality of pairs of the convex portion 203 and the concave portion 205 may be formed. Lengths from the first surface 201 to tips of the plurality of convex portions 203 may be different from each other. Moreover, lengths from the first surface 201 to bottoms of the plurality of concave portions 205 may be different from each other.

0026 Shapes of the convex portion 203 and the concave portion 205 may be a shape of a triangular pyramid or a shape of a quadrangular pyramid. The shapes of the convex portion 203 and the concave portion 205 may be, in FIG. 2, shapes having depths in the Y-direction in the same cross section. According to the selection of shapes, a degree of freedom of design property is enhanced.

0027 The tip of the convex portion 203 and the bottom of the concave portion 205 may have tapered shapes. The tapered shape means a shape that is narrowed gradually from the first surface 201 to the tip of the convex portion 203 or the bottom of the concave portion 205. According to the aforementioned configuration, a design property using a refraction and a reflection of light that enters the glass plate 101 can be given to the glass plate 101. The tip portion of the convex portion 203 and the bottom portion of the concave portion 205 may have acute shapes. According to the shapes, the size of the inclined surface 206 can be increased, and the design property of the glass plate 101 can be enhanced. For example, curvature radii of the tip portion of the convex portion 203 and the concave portion 205 are preferably 1 mm or less, more preferably 0.8 mm or less, and further preferably 0.5 mm or less.

0028 Moreover, the tip portion of the convex portion 203 and the bottom portion of the concave portion 205 may have planar shapes. According to the shapes, when a single body of the glass plate 101 is bonded to a plate-like body 502 such as a wall surface, where the first surface 201 side of the glass plate 101 is a bonding surface, required bonding areas can be obtained easily. The planar shape of the tip portion of the convex portion 203 may be formed by grinding the tip of the convex portion 203.

0029 With reference to the first surface 201, a distance to the tip of the convex portion 203 is preferably 0.1 mm or more, more preferably 0.5 mm or more, and further preferably 1 mm or more. Compared with the first surface 201, differences in the refraction and the reflection of light that enters the glass plate 101 become more evident, and more elaborate design property can be given to the glass plate 101. With reference to the first surface 201, a distance to the tip of the convex portion 203 is preferably 20 mm or less, more preferably 18 mm or less, and further preferably 15 mm or less. Thus, the convex portion 203 becomes difficult to damage.

0030 With reference to the first surface 201, a distance to the bottom of the concave portion 205 is preferably 0.1 mm or more, more preferably 0.5 mm or more, and further preferably 1 mm or more. Compared with the first surface 201, differences in the refraction and the reflection of light that enters the glass plate 101 become more evident, and more elaborate design property can be given to the glass plate 101. With reference to the first surface 201, a distance to the bottom of the concave portion 205 is preferably 20 mm or less, more preferably 18 mm or less, and further preferably 15 mm or less. Thus, the convex portion 203 becomes difficult to damage.

0031 Moreover, a distance "B" from the second surface 202 to the tip of the convex portion 203 is preferably 10 mm or less, and more preferably 8 mm or less. Thus, the weight of the glass plate 101 is reduced, and the glass plate 101 can be bonded to the plate-like body 502 with a small bonding force.

0032 Moreover, a distance "C" from the second surface 202 to the bottom of the concave portion 205 is preferably 70% or more of a distance "D" from the second surface 202 to the first surface 201, more preferably 80% or more, and further preferably 90% or more. When an external force (e.g. pressing force) is applied from the second surface 202 side of the glass plate 101 toward the first surface 201 side of the glass plate 101, the glass plate is deflected as a whole. According to the aforementioned configuration, even if tensile stresses are concentrated on the concave portion 205, the glass plate 101 is difficult to damage.

0033 Moreover, at least one of an angle α of the concave portion 205 and an angle β of the convex portion 203, as illustrated in FIG. 2, is preferably 90°±20°, more preferably 90°±15°, and further preferably 90°±10°. According to the configuration, a light reflected on the convex portion 203 and the concave portion 205 is likely to be returned to the original incident direction of the light, and is likely to be recognized by a person as a light having a great luminance. In particular, both angles α and β preferably are within the above-described range.

0034 Moreover, the angle α of the concave portion 205 may be different from the angle β of the convex portion 203. Particularly, as illustrated in FIG. 4, in the case where the concave portion 205 having a great angle of α is arranged, the glass plate 101 with high design property, which is difficult to damage even if tensile forces are concentrated on the concave portion 205, and has a great luminance, is obtained.

0035 When the convex portion 203 and the concave portion 205 have optional curvature radii, respectively, the angle α indicates an angle between extensions of the inclined surfaces 206 configuring the concave portion 205 at the bottom of the concave portion 205. Similarly, the angle β indicates an angle between extensions of the inclined surfaces 206 configuring the convex portion 203 at the tip of the convex portion 203.

0036 The first surface 201, and surfaces of the convex portion 203 and the concave portion 205 may be polished. According to the treatment, a die mark generated upon shaping using a metallic mold or the like can be removed, and the surface becomes smooth. Thus, diffused reflection is controlled, and thereby the design property is enhanced. The surface roughness of the first surface 201 is preferably 10 µm or less, more preferably 5 µm or less, and further preferably 1 µm or less.

0037 As illustrated in FIG. 5, each of the first surface 201, the convex portion 203 and the concave portion 205 may have a coating layer 401 on the surface. The coating layer 401 may be a hard coating in order to enhance a scratch resistance. Moreover, the coating layer 401 may be a layer by which gold, chromium, aluminum, or a metal oxide is deposited. Because a metallic luster is given, the design property of the glass plate is enhanced. Moreover, the coating layer 401 preferably has a reflectance of 70% or more for a light having a wavelength of 380 to 750 nm and being incident at an incident angle of 45°, more preferably 80% or more, and further preferably 85% or more. As the reflectance of the convex portion 203 and the concave portion 205 approaches total reflection, a person is likely to recognize greater luminance. Particularly, the coating layer 401 may be arranged on the convex portion 203 and the concave portion 205.

0038 The second surface 202 may be a polished surface. When the glass plate 101 is bonded to a wall surface or the like, where the first surface 201 side of the glass plate 101 is a bonding surface, because the second surface 202 is a surface that is touched by a person, the second surface 202 is preferably smooth. Moreover, on the second surface 202, a protection layer, which is difficult to be scratched and to which fingerprints are difficult to adhere, may be formed.

0039 The glass plate 101 has a visible light transmissivity (Tv) that is 70% or more, preferably 80% or more, and more preferably 90% or more. When the glass plate 101 is bonded to a wall surface or the like, where the first surface 201 side of the glass plate 101 is a bonding surface, a person, who sees the first surface 201 from the second surface 202 side, can sense a characteristic design property from a light that is refracted or reflected on the first surface 201.

0040 The glass plate 101 may be a strengthened glass. The glass plate 101 may be a strengthened glass that is subjected to an air cooling strengthening or a chemical strengthening.

0041 FIGS. 6 to 8 are cross sections depicting a first example 510, a second example 610, and a third example 710 of a glass structure each using the glass plate 101 according to the embodiment. The glass plate 101 is bonded to the plate-like body 502 via an adhesive material 501, where the first surface 201 side of the glass plate 101 is a bonding surface. The adhesive material 501 may be a publicly known adhesive, or may be a double-faced tape or the like.

0042 In FIG. 6, the convex portion 203 and the concave portion 205 are provided with the adhesive material 501, and bonded to the plate-like body 502. In this configuration, when a difference between a thickness of the adhesive material existing between the convex portion 203 and the plate-like body 502 and a thickness of the adhesive material existing between the concave portion 205 and the plate-like body 502 is small, a bonding strength becomes stable, and is preferable.

0043 Moreover, in a gap F between the plate-like body 502 and the first surface 201, the adhesive material 501 may exist. According to the configuration, the bonding strength between the glass plate 101 and the plate-like body 502 is enhanced.

0044 In FIG. 7, the glass structure includes the glass plate 101, the plate-like body 502, and a spacer 601. The spacer 601 is connected to the glass plate 101 and the plate-like body 502 via the adhesive material 501. Because a continuous bonding area can be obtained by the spacer 601, the bonding strength between the glass plate 101 and the plate-like body 502 can be enhanced. Moreover, in a space 602 between the plate-like body 502 and the glass plate 101 formed by the spacer 601, the adhesive material 501 is not required to be arranged. According to the configuration, an amount of the adhesive material 501 used in this configuration can be reduced. Moreover, when the adhesive material exists on the convex portion 203 and the concave portion 205, depending on refractive indices of glass and the adhesive material, the design property that the convex portion and the concave portion originally have may be deteriorated by the adhesive material. When the adhesive material is absent on the convex portion 203 and the concave portion 205, the design property will be maintained.

0045 FIG. 8 is a diagram depicting a variation of the glass structure illustrated in FIG. 7. That is, FIG. 8 depicts an example of a glass structure in which the spacer 601 and the plate-like body 502 are integrated. By using the plate-like body with spacer 701, illustrated in FIG. 8, the amount of the adhesive material 501 can be reduced. Moreover, a step of arranging the spacer 601 can be omitted. The plate-like body with spacer 701 is, for example, a plate like body obtained by shaping the spacer 601 and the plate-like body 502 integrally.

0046 The plate-like body 502 or the plate-like body with spacer 701 may be a wall surface of a building, a glazing, a mobile apparatus such as a mobile phone or a smartphone, a vehicular interior member or a vehicular exterior member, or the like. Particularly, in the case where the plate-like body 502 or the plate-like body with spacer 701 is a vehicular interior member or a vehicular exterior member (vehicle decorative member), vibrations from an engine or vibrations from a road surface during a vehicle travelling are applied to the glass plate 101, and the glass structure in which high adhesive strength can be obtained, as illustrated in FIGS. 7 and 8, is preferably used.

### [Industrial Applicability]

0047 The present invention relates to a glass plate and a glass structure, and particularly can be preferably used for a vehicle decorative member, an indoor decorative member, or the like.

0048 The present international patent application is based on and claims the benefit of priority of Japanese Priority Application No. 2016-054013 filed on March 17, 2016, the entire contents of which are hereby incorporated by reference.

### [Reference Signs List]

0049
- 101: glass plate
- 102: periphery
- 103: peripheral region
- 104: in-plane region
- 201: first surface
- 202: second surface
- 203: convex portion
- 206: inclined surface
- 206a: first inclined surface
- 206b: second inclined surface
- 301: first light path
- 302: first point
- 303: second point
- 304: second light path
- 305: third point
- 306: fourth point
- 401: coating layer
- 501: adhesive material
- 502: plate-like body
- 150,610,710: glass structure
- 601: spacer
- 602: space
- 701: plate-like body with spacer
- α: angle of concave portion
- β: angle of convex portion
- G: center of gravity
- A-A: cross section passing through center of gravity
- B: distance from second surface to tip of convex portion
- C: distance from second surface to concave portion
- D: distance from second surface to first surface
- F: gap between plate-like body and first surface

## Claims

1. A glass plate comprising a first surface and a second surface that is opposite to the first surface,
wherein a concave portion is formed on the first surface toward the second surface side with reference to the first surface, and
wherein a convex portion is formed on the first surface toward a side opposite to the second surface with reference to the first surface.

2. The glass plate according to claim 1,
wherein a distance from the second surface to a tip of the convex portion is 10 mm or less.

3. The glass plate according to claim 1 or 2,
wherein the distance from the second surface to the bottom of the concave portion is 70% or more of a distance from the second surface to the first surface.

4. The glass plate according to any one of claims 1 to 3,
wherein the concave portion and the convex portion are provided with a coating layer on surfaces.

5. The glass plate according to any one of claims 1 to 4,
wherein the coating layer has a reflectance of 70% or more for a light having a wavelength of 380 to 750 nm and being incident at an incident angle of 45°.

6. The glass plate according to any one of claims 1 to 5,
wherein at least one of an angle of the convex portion and an angle of the concave portion is within a range of 90°±20°.

7. A glass structure comprising:
the glass plate according to any one of claims 1 to 6; and
a plate-like body,
wherein the convex portion and the concave portion are provided with an adhesive material, and
wherein the glass plate is bonded to the plate-like body via the adhesive material.

8. A glass structure comprising;
the glass plate according to any one of claims 1 to 6;
a plate like body; and
a spacer,
wherein the spacer is connected to the first surface and to the plate-like body.
